# EUROPEAN PATENT APPLICATION

(11) **EP 1 855 273 A2**
(43) Date of publication of application: **14.11.2007**
(21) Application number: 07251884.8
(22) Date of filing: 04.05.2007
(51) Int. Cl.: G11B 5/00, G11B 5/74

(54) **Data storage device with bit patterned media with staggered islands**

(30) Priority: 08.05.2006 US 430809
(71) Applicant: Seagate Technology LLC, Scotts Valley, CA 95066 (US)
(72) Inventor: Richter, Hans Jurgen, Palo Alto, CA 94301 (US); Dobin, Alexander Yulievich, Milpitas, CA 95035 (US); Weller, Dieter Klaus, San Jose, CA 95120 (US)
(74) Representative: Cloughley, Peter Andrew

(57) **Abstract**

A data recording device employs a bit patterned data recording medium that has an array of rows that are offset to one another. The rows are offset such that the bits are staggered in a direction that is normal to the direction in which the rows extend. The increased bit aspect ratio of the staggered bit pattern recording medium increases the linear recording density and enables a higher data recording rate.

## Description

### FIELD OF THE INVENTION

The present disclosure relates to the field of data storage, and more particularly to data storage devices, such as magnetic disc drives, for the recording of data on bit patterned media.

### BACKGROUND OF THE INVENTION

Patterned media are regarded as a promising alternative to increase storage density for magnetic hard disk recording. In conventional recording, the transitions are placed on granular media, which are composed of single-domain particles. Due to the granular nature, the transitions are not placed exactly where intended and any deviations represent medium noise which limits the density that can be recorded. A way to reduce this statistical uncertainty and to decrease the medium noise is to reduce the grain size. Due to the superparamagnetic effect, the grain size has a lower limit as does the signal-to-noise ratio in conventional recording.

An alternative to conventional recording media is bit patterned media. In bit patterned media, the bits do not contain as many grains as those in conventional media. Instead, bit patterned media comprise arrays of magnetic islands which are recorded one at a time and thus each island represents one bit. Such media structures can be manufactured by lithographical processes. The signal-to-noise ratio of a bit patterned medium is then determined by the variations of the island spacings and sizes and thus depends on the quality of the lithography process. Accordingly, the signal-to-noise ratio can be improved considerably beyond that of conventional media.

There are limits, however, to the lithography process so that the density of the islands is limited. The highest areal density is obtained when the spacings between the islands in the cross-track and the down-track directions are identical. Moreover, a recording on patterned media needs to be synchronized and therefore the bits should not be placed "bumper to bumper".

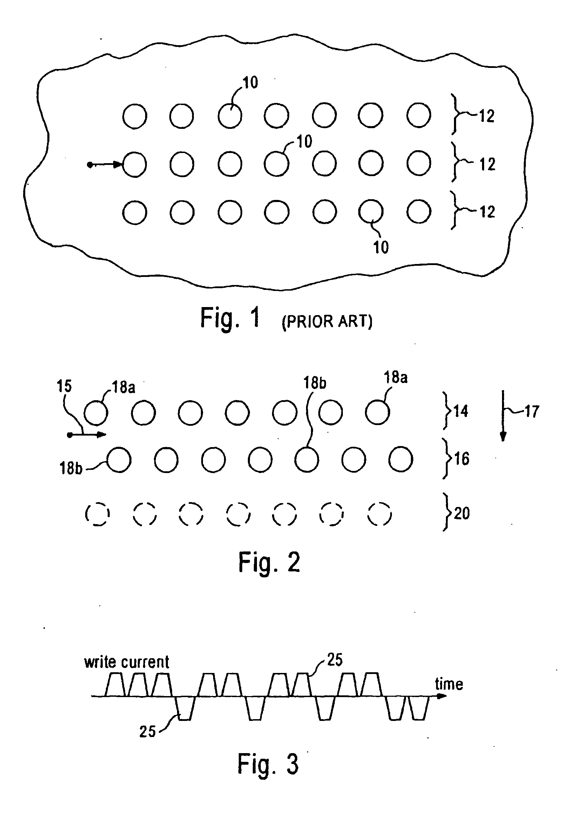

Referring.to Fig. 1, which depicts a regular array of patterned bits 10, a record or write head would be moved along a row of islands and switched or pulsed to achieve the desired recording of data The spacing between track and bits is the same, so that the aspect ratio of one bit (the "bit aspect ratio") is 1.

Conventional recording systems have bit aspect ratios that are considerably higher than 1, more normally between 5 and 20. High bit aspect ratios are desirable, because they result in a higher linear density and thus in a higher data rate for the recording. In addition, fabrication of the read and write heads is much easier, because the dimensions are not required to be so small. Write heads with larger dimensions are preferred, because the fields are reduced if the surface area of the head is reduced. Therefore, due to the small dimensions involved, a recording system with a patterned medium has been difficult to realize in practice and also less attractive in terms of achievable performance.

### SUMMARY OF THE INVENTION

There is therefore a need for bit patterned media, and a data storage device employing such media, that has a greater bit aspect ratio without a loss of areal density.

This and other needs are met by disclosed embodiments which provide a bit patterned recording medium, comprising an array of magnetic islands, the array having a plurality of rows of the islands, wherein at least one adjacent pair of magnetic islands in adjacent rows are offset to one another.

The above needs are also met by the disclosed embodiments which provide a data storage device, comprising a bit patterned recording medium having an array of data islands arranged in a plurality of rows with a bit aspect ratio greater than 1, and a writing head configured to write data to the data islands.

The above needs are also met by the disclosed embodiments which provide a data storage device comprising a write head that writes data, and means for storing data written by the write head.

The foregoing and other features, advantages and aspects of the present disclosure will become more apparent from the following detailed description and the accompanying claims.

### BRIEF DESCRIPTION OF THE DRAWINGS

Figure 1 is a schematic depiction of a portion of a conventional bit patterned recording medium.

Figure 2 is a schematic depiction of a portion of a bit patterned recording medium of a data storage device construed in accordance with disclosed embodiments of the invention.

Figure 3 is an exemplary write current that illustrates an exemplary timing to be used with the embodiment of a bit patterned recording medium of Figure 2.

Figure 4 illustrates elements of a data storage device in accordance with certain embodiments of the present invention, for use with the bit patterned recording medium of Figure 2.

Figure 5 is a schematic depiction of a portion of a bit patterned recording medium of a data storage device construed in accordance with certain disclosed embodiments of the invention.

Figure 6 is an exemplary write current that illustrates an exemplary timing to be used with the embodiment of a bit patterned recording medium of Figure 5.

Figure 7 illustrates elements of a data storage device in accordance with certain embodiments of the present invention, for use with the bit patterned recording medium of Figure 5.

Figure 8 depicts another embodiment of the present invention including empty spaces between double rows of bits.

### DETAILED DESCRIPTION

The embodiments of the invention described herein address and solve problems related to the low bit aspect ratio of bit patterned media. In particular, the embodiments of the invention address improving the bit aspect ratio of bit patterned media of a data storage device without decreasing areal density. The embodiments of the invention achieve this by providing an array of magnetic islands that are formed in a plurality of rows, with adjacent rows being offset with respect to one another. The offsetting of the adjacent rows creates a staggering of the islands. The staggering of the islands produces a higher bit aspect ratio, resulting in a higher linear density, thereby improving the data rate, and allowing the use of a larger recording head.

Figure 2 is a schematic depiction of a portion of a bit patterned recording medium of a data storage device in accordance with disclosed embodiments of the invention. In this embodiment, adjacent rows are offset. As seen in Figure 2, a first row 14 and a second row 16 extend in a first direction 15. Within each row 14, 16, data islands 18 are equally spaced from each other. As well, the rows 14 and 16 are parallel so that the vertical spacing between the rows 14 and 16 is constant.

The adjacent rows 14, 16 in the array are offset with respect to one another such that at least some of the data islands 18a in row 14 and the data islands 18b in row 16 are not aligned with one another in direction 17, which is normal with respect to direction 15. The direction of arrow 15 represents the direction of travel of a read head and a write head or a read/write head. In certain embodiments, such as those illustrated, each of the data islands 18 in one row are offset with respect to the data islands 18 in an adjacent row. In certain embodiments, only some of the data islands 18 of a row are offset with respect to the data islands 18 in an adjacent row.

In the embodiment of Figure 2, every other row 14, 16 is offset from the immediately adjacent row 14, 16, such that every other row aligns. In other words, if row 14 is considered to be the nth row, row 16 is the nth +1 row and is offset with respect to the nth row. The next row 20 in the array, shown in phantom immediately beneath row 16 in Figure 2, is not offset with respect to row 14. Row 20 can be considered the nth + 2 row in the array. Similarly, the next row in the array, below row 20, would be aligned (not offset) with row 16. The data islands 18 are therefore aligned in every other (nth + 2) row.

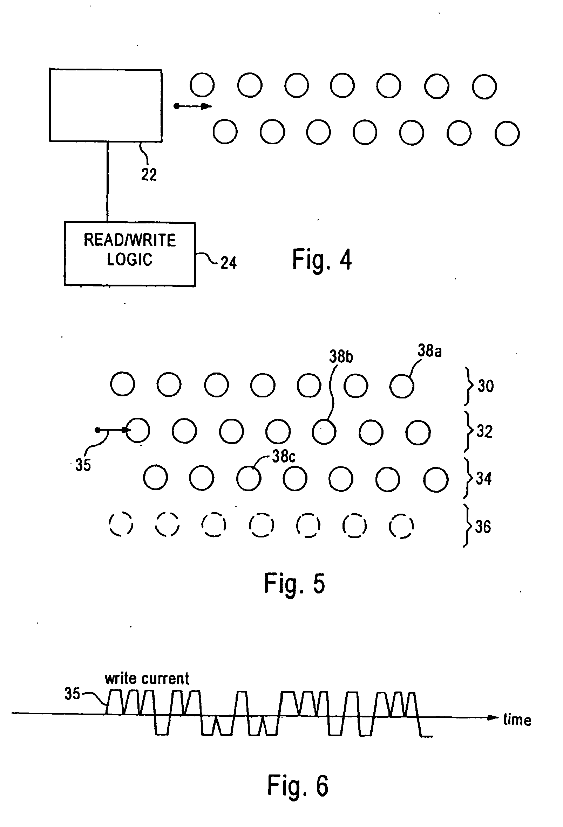

The writing of data to the data islands 18 can be achieved through the use of a write head 22, as depicted in Figure 4. In certain embodiments of the invention, the write head 22 is wide enough to enable writing two rows, e.g. rows 14, 16, simultaneously. For example, the write head 22 can have a width equal to twice the pitch of the bits. The writing can be accomplished by using pulsed recording or square wave recording, such as employed in conventional systems. However, the writing of the two rows simultaneously requires appropriate timing.

Figure 3 is provided directly below Figure 2 and illustrates an exemplary write current to illustrate an exemplary write timing. The write current is shown directly below the data islands 18a, 18b so that the pulses 25 are shown as aligned with the data islands 18a, 18b for illustration purposes. This example depicts pulsed writing. As can be seen, every pulse 25 corresponds to one of the data islands 18a, 18b (i.e., one of the bits) in one of the rows 14, 16. The pulses alternate between rows 14, 16, such that every other pulse 25 writes every other row. Hence, in the example illustrated in Figures 2 and 3, the first pulse 25 in the sequence writes a data island 18a in the first row 14; the second pulse 25 writes a data island 18b in the second row 16; the third pulse 25 writes a data island 18a in the first row 14, etc.

Read/write logic 24, shown in Figure 4, provides the appropriate switching of the write current to achieve the synchronized writing, such as shown in Figure 3. Further, the read/write logic 24 uses data analysis to decode the interleaved information when reading the bits encoded in the data islands 18.

The staggering of the bits by the offsetting of the rows 14, 16 in the embodiment of Figure 2 doubles the effective bit density. At the same time, the effective track density is reduced by a factor of 2. Hence, the bit aspect ratio is increased to 4 for the embodiment of Figure 2.

The increase in bit aspect ratio has a number of advantages. The higher linear density leads to a higher data rate for recording. In addition, the fabrication of the read and write heads is much easier, because the dimensions of the heads do not have to be as small as in those with media patterned as in Figure 1 having the lower bit aspect ratio. Since the heads are not reduced in size, the fields are not reduced. Hence, a data recording device constructed in accordance with embodiments of the present invention to employ staggered bit patterned media is more attractive in terms of achievable performance.

In certain embodiments of the invention, the data islands 18 are magnetic islands. Methodologies for the formation of a bit patterned medium, including those with magnetic islands, is known. The staggering of the bits formed by the data islands 18, according to certain embodiments of the invention, can also be extended to further increase the bit aspect ratio from the inventive embodiments of Figures 2-4.

Figure 5 is a view similar to Figure 2, but depicts an alternate embodiment in which three rows of data islands are employed in a set of rows. A first row 30, or nth row, extends in a first direction 35, as does a second row 32, or nth +1 row, and a third row 34, or nth + 2 row. A fourth row 36, or nth 3 row, is shown in phantom. The data islands are referenced in the respective rows as 38a, 38b, 38c and 38d, and generally as 38.

As in the embodiment of Figure 2, the bit patterned media of Figure 5 has an nth row 30 and an nth +1 row that are offset from one another such that the data islands 38 are not aligned in a direction that is normal to the read/write direction 35. In the embodiment of Figure 5, however, the nth + 2 row (row 34) is also offset from the nth row (row 32), instead of being aligned with the nth row (row 32). The nth +3 row (row 36, in phantom) is aligned with the nth row (row 32). This arrangement therefore creates sets of three rows (e.g., rows 30, 32, 34) that are repeated on the medium.

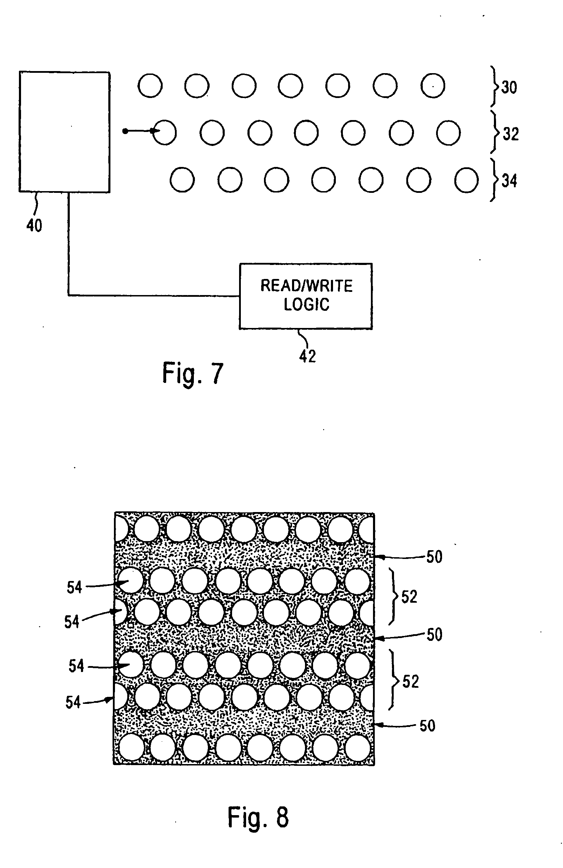

The write head 40 (and a read head, not shown) may be made even larger than the embodiment of Figure 4, as shown in Figure 7. The write head 40 may have a width equal to three times the bit pitch. The larger head 38 makes manufacture more readily achievable.

The operation of the data recording device for the embodiment of Figures 5 and 7 is substantially the same as that described for the embodiment of Figures 2 and 4. An exemplary write current illustrating exemplary timing employed to write the data islands 38 in the three rows 30, 32 and 34 simultaneously is depicted in Figure 6. The write current is shown directly below the data islands 38a, 38b, 38c so that the pulses 35 are shown as aligned with the data islands 38a, 38b, 38c for illustration purposes. As can be seen, every pulse 35 corresponds to one of the data islands 38a, 38b, 38c (i.e., one of the bits) in one of the rows 30, 32, 34. The pulses switch between rows 30, 32, 34, such that every third pulse 25 writes a data island 38 in every third row 30, 32, 34. Hence, in the example illustrated in Figures 5 and 6, the first pulse 35 in the sequence writes a data island 38a in the first row 30; the second pulse 35 writes a data island 38b in the second row 32; the third pulse 35 writes a data island 38c in the third row 34.

Read/write logic 42, shown in Figure 7, provides the appropriate switching of the write current to achieve the synchronized writing, such as shown in Figure 6. Further, the read/write logic 42 uses data analysis to decode the interleaved information when reading the bits encoded in the data islands 38. The other elements of the data recording device of Figures 4 and 7 are not depicted so as not to obscure features of the embodiments of the present invention.

The staggering of the bits by the offsetting of the rows 30, 32, 34 in the embodiment of Figure 5 triples the effective bit density. At the same time, the effective track density is reduced by a factor of 3. Hence, the bit aspect ratio is increased to 9 for the embodiment of Figure 5.

Figure 8 depicts another embodiment of the invention in which the bit aspect ratio (BAR) is changed by introducing empty spaces between double rows. In Figure 8, spaces 50 are provided between pairs 52 of adjacent offset rows 54. Hence, the BAR can be fine tuned by the addition of empty spaces between certain rows. In other words, the distance between certain adjacent rows is unequal. For example, the distance between two adjacent rows in a pair 52 of rows 54 is less than the distance between the pairs 52.

The bit patterned recording media with staggered bits may be considered means for storing data written by a write head.

The embodiments of the present invention are not limited to two and three row widths. The embodiments may be extended to greater numbers of rows, limited by practical tradeoffs such as timing accuracy, the increased need for high down-track resolution, maintaining the same read sensitivity and the speed of the data processing.

Although certain embodiments of the present invention have been described in detail above, this is not to be taken by way of limitation as the embodiments of the present invention are to be limited only by the terms of the appended claims.

## Claims

1. A bit patterned recording medium, comprising:
an array of magnetic islands, the array having a plurality of rows of the islands;
wherein at least one adjacent pair of magnetic islands in adjacent rows are offset to one another.

2. The medium according to claim 1, wherein the rows extend in a first direction and are offset with respect to one another such that the islands of at least some of the adjacent rows are not aligned in a second direction that is normal with respect to the first direction.

3. The medium of claim 2, wherein every nth row and nth +2 row are not offset to one another such that the islands of the nth and nth + 2 rows are aligned in the second direction.

4. The medium of claim 2, wherein every nth row and nth +3 row are not offset to one another such that the islands of the nth and nth + 3 rows are aligned in the second direction.

5. The medium of claim 2, wherein the rows are grouped in adjacent sets, with each set including a first row, a second row that is offset with respect to the first row and a third row offset with respect to the first and second rows.

6. The medium of claim 5, wherein the adjacent sets are arranged such that the third row of a first one of each adjacent set is adjacent to the first row of a second one of the adjacent sets.

7. The medium of claim 1, wherein the magnetic recording medium has a bit aspect ratio greater than 1.

8. The medium of claim 7, wherein the bit aspect ratio is 4.

9. The medium of claim 8, wherein the bit aspect ratio is 9.

10. A data storage device, comprising:
a bit patterned recording medium having an array of data islands arranged in a plurality of rows with a bit aspect ratio greater than 1; and
a writing head configured to write data to the data islands.

11. The data storage device of claim 10, wherein the plurality of rows are arranged such that adjacent rows are offset with respect to one another.

12. The data storage device of claim 11, wherein each of the non-adjacent rows are aligned with one another.

13. The data storage device of claim 12, wherein the write head is configured to write two adjacent rows simultaneously.

14. The data storage device of claim 13, wherein the data islands are magnetic islands.

15. The data storage device of claim 11, wherein the rows are grouped in adjacent sets, with each set including a first row, a second row that is offset with respect to the first row, and a third row that is offset with respect to the first and second rows.

16. The data storage recording device of claim 15, wherein the write head is configured to write three adjacent rows simultaneously.

17. The data storage device of claim 16, wherein the data islands are magnetic islands.

18. A data storage device comprising:
a write head that writes data; and
means for storing data written by the write head.

19. The data storage device of claim 18, wherein the means for storing data includes an array of magnetic islands, the array having a plurality of rows of the islands, wherein adjacent rows are offset to one another.

20. The data storage device of claim 19, wherein the array has a bit aspect ratio greater than 1.

21. The medium of claim 1, wherein at least some of the adjacent rows are spaced a first distance apart from one another, and at least some other of the adjacent rows are spaced a second distance apart from one another, the first and second distances being unequal.
